# EUROPÄISCHE PATENTSCHRIFT

(11) **EP 0 329 134 B1**
(45) Veröffentlichungstag und Bekanntmachung des Hinweises auf die Patenterteilung: **19.01.1994**
(21) Anmeldenummer: 89102678.3
(22) Anmeldetag: 16.02.1989
(51) Int. Cl.: B60C 27/14

(54) **Verfahren und Vorrichtung zum Aufziehen eines Gleitschutzelementes, insbesondere eines Gleitschutzkette auf ein Kraftfahrzeugrad**
Process and device for mounting an antislip element, particularly an antislip chain, on a wheel of a motor vehicle
Procédé et dispositif pour le montage d'un élément anti-dérapant, en particulier d'une chaîne anti-dérapage sur une roue de véhicule

(30) Priorität: 18.02.1988 DE 3805105; 23.12.1988 DE 3843696
(43) Veröffentlichungstag der Anmeldung: 23.08.1989
(73) Patentinhaber: Reiber, Konrad, 86860 Jengen (DE)
(72) Erfinder: Reiber, Konrad, 86860 Jengen (DE)
(74) Vertreter: Bockhorni, Josef, Dipl.-Ing.

(56) Entgegenhaltungen:
- AT-B- 361 789
- DE-A- 2 911 194
- US-A- 1 489 963
- US-A- 1 511 657

## Beschreibung

Die Erfindung betrifft ein Verfahren bzw. eine Vorrichtung zum Aufziehen eines Gleitschutzelementes, insbesondere einer Gleitschutzkette auf ein Kraftfahrzeugrad gemäß dem Oberbegriff des Patentanspruches 1 bzw. des Patentanspruches 9.

Trotz weiterer Verfeinerung der Antriebsmechanismen, wie automatische Stabilitätskontrolle, bei der beim Durchdrehen auch nur eines Rades die Motorleistung von sämtlichen Antriebsrädern weggenommen wird, und dem zunehmenden Einsatz von Allradantrieben ist ein vergleichsweises sicheres Fahren von stark verschneiten Straßen nur unter Verwendung von Gleitschutzketten, insbesondere Schneeketten möglich. Zwar ist das Aufziehen von Schneeketten durch neuere Entwicklungen in erheblicher Weise vereinfacht worden, jedoch gleichwohl problematisch , weil das Aufziehen zumeist erst in einer Notlage erfolgt, wenn also das Fahrzeug im tiefen Schnee festsitzt. In diesen extremen Situationen ist auch das Aufziehen der modernen Schneeketten mit entsprechenden Schwierigkeiten verbunden. Dies ist der Grund, weshalb viele Autofahrer von Schneeketten Abstand nehmen oder selbst in extremen Situationen das Aufziehen der Schneeketten herauszögern oder vermeiden, weil einfach der Aufwand beim Aufziehen der Schneeketten noch als zu groß erachtet wird. Trotz der unbestrittenen Vorteile der Schneeketten verzichten somit eine Vielzahl von Kraftfahrern auf den Einsatz dieser zweckmäßigen Hilfsmittel.

Zwar ist es bereits bekannt (AT-A- 366 628), Schneeketten selbsttätig auf ein Kraftfahrzeugrad aufzuziehen, jedoch ist die hierfür verwendete Vorrichtung außerordentlich kompliziert aufgebaut und somit sehr störungsanfällig und erfordert zudem einen sehr großen Platzaufwand, so daß die Vorrichtung kaum in einem Kraftfahrzeug untergebracht werden kann. Aus diesem Grund haben sich derartige automatische Einrichtungen in der Praxis noch nicht durchsetzen können.

Des weiten ist aus des AT-A-361 789 eine Vorrichtung und ein Verfahren bekannt, die die Merkmale der Oberbegriffe der Ansprüche 1 und 5 bilden.

Aufgabe der Erfindung ist es, ein Verfahren und eine Vorrichtung zum selbsttätigen Aufziehen einer Gleitschutzkette zu schaffen, welches mit vergleichsweise wenigen und baulich einfachen Teilen auskommt, mithin robust und störunanfällig ist, sich durch eine hohe Lebensdauer und große Betriebszuverlässigkeit auszeichnet. Ein weiterer Aspekt besteht darin, daß die Vorrichtung auf möglichst geringem Raume untergebracht werden soll, so daß sie ohne großen Aufwand in Kraftfahrzeugen untergebracht werden kann, insbesondere das Nachrüsten vorhandener Kraftfahrzeuge ohne weiteres möglich ist.

Diese Aufgabe wird für das Verfahren durch die im kennzeichnenden Teil des Patentanspruches 1 und für die Vorrichtung durch die im kennzeichnenden Teil des Anspruches 9 enthaltenen Merkmale gelöst, wobei zweckmäßige Weiterbildungen des Verfahrens bzw. der Vorrichtung durch die in den Unteransprüchen angegebenen Merkmale gekennzeichnet sind.

Nach Maßgabe der Erfindung wird der gesamte Mechanismus zum selbsttätigen Aufziehen der Kette in einem kastenartigen Bauteil untergebracht, dessen Gesamtabmessungen sehr kompakt gehalten werden können. So beträgt bei einem praxiserprobten Prototyp der Erfindung die Längsabmessung etwa 30 cm bei einer Breite von ca. 20 cm und einer Höhe von ca. 7 cm, wobei diese Abmessungen bei verfeinerter Auslegung ohne weiteres noch beträchtlich reduziert werden können. Dieser Kasten läßt sich somit bequem an einem Kraftfahrzeugrahmen befestigen, insbesondere darin integrieren und auch nachträglich einbringen, wozu zweckmäßigerweise bereits entsprechende Aufnahmen, insbesondere Aussparungen bzw. Öffnungen in Karosserierahmen vorgesehen sein können.

Zweckmäßigerweise ist das Gehäuse der Vorrichtung selbst im Fahrzeugrahmen integriert, so daß der Kasten praktisch durch den Fahrzeugrahmen gebildet ist, in welchem die Teile der Vorrichtung aufgenommen sind. Im Falle einer entsprechenden Aufnahme am Fahrzeugrahmen ist es zweckmäßig, wenn die Aufnahme durch ein Befestigungselement in Art einer Aufsteckführung, etwa Schwalbenschwanzführung oder dergleichen, gebildet ist, so daß für die Nachrüstung eines Fahrzeuges der Kasten auf die Führung aufgesteckt und dann am Rahmen befestigt werden kann, etwa durch Verschraubung oder Verstiftung.

Die Kette wird im Kasten axial zusammengerafft im wesentlichen auf der Ebene des Kastenbodens aufgenommen und wird axial ausgezogen und zwar über einen Griffbügel, der motorisch linear in Richtung auf das dem Kasten gegenüberliegend angeordnete Kraftfahrzeugrad verfahren wird. Der im wesentlichen U-förmige Griffbügel gelangt mit seinem U-Steg in Anschlag an die Lauffläche des Rades, wodurch der motorische Antrieb gestoppt wird. Der Griffbügel wird dann von der Halterung gelöst, was in geeigneter Weise erfolgen kann, insbesondere etwa durch Zurückfahren der Halterung, so daß der auf dem Rad infolge der federnden Schenkel fest aufsitzende Griffbügel von der Halterung abgezogen wird. Nach Aufsitzen des Griffbügels wird das Fahrzeug zurückgesetzt, so daß durch Drehung des Rades die Kette aus dem Kasten herausgezogen wird. Ein einwandfreies Ausziehen wird dadurch ermöglicht, daß ein leichter Zug auf die Kette ausgeübt wird, und zwar in Gegenrichtung der Ausziehbewegung. Dadurch kann die Kette ohne Verkantungen problemfrei ausgefahren werden. Zweckmäßigerweise wird der Zug bzw. der Druck auf die Kette durch Reibglieder, insbesondere mit Abstand zueinander angeordnete Borstenbüschel aufgebracht, wobei unterhalb der Kette, also auf dem Kastenboden die Borstenbüschel angeordnet sein können und zusätzlich von oben Borstenbüschel auf die Kette drücken, die am Kastendeckel befestigt sind. Anstelle einer Kette kann als Gleitschutzelement auch eine Anordnung aus mit Spikes bestückten Gummibändern, eine mit Spikes bestückte Matte od. dgl. verwendet werden.

Am Kettenende befindet sich ein Verschlußbügel, der nach voller Radumdrehung in entsprechende Ausnehmungen bzw. Laschen im Greifbügel einrasten, der am vorderen Kettenende angebracht ist, wobei durch weiteren Zug auf die Kette der Verschlußbügel aus seiner Halterung ausgerückt wird und schließlich durch ein Andrückglied gegen das Rad gedrückt wird. Dadurch kommt es sowohl zu einem Spannen der Kette wie auch zu einem Verriegeln der Kette, indem ein Verschlußglied am Verschlußbügel in die bereits auf dem Rad befindliche Kette eingedrückt wird.

In zweckmäßiger Weise erfolgt der lineare Antrieb des Griffbügels über eine Spindel, die einen Schlitten antreibt, an dem auch das Andrückglied angelenkt wird. Dieses Andrückglied wird somit mit Ausfahren des Griffbügels aus dem Kasten herausbewegt und schwenkt infolge des Eigengewichts nach unten, so daß die Kette bequem aus dem Kastengehäuse ohne Störung durch das Andrückglied ausgezogen werden kann. Das Andrückglied ist hierbei federnd vorgespannt, so daß es einerseits ausweichen kann und andererseits wieder in seine vorherige Lage zurückgeschwenkt wird. Das Andrückglied dient zum Einrücken des Verschlußbügels, der zweckmäßigerweise einen Verriegelungsszapfen für den Eingriff in die Kette trägt. Dieser Verriegelungszapfen kann durch eine Nocke aus seiner Raststellung ausgelöst werden und zwar beim Vorbeifahren am Andrückglied, so daß eine selbsttätige Verriegelung des Verschlußbügels gewährleistet ist.

Für das einwandfreie Ausziehen der Kette aus dem Gehäuse ist es zweckmäßig, den Halter zur Aufnahme des Verschlußbügels längsverschieblich anzuordnen und zwar auf einem Schlitten, so daß sich der Verschlußbügel in Lagerstellung der Kette etwa oberhalb des hinteren Kettenendes innerhalb des Kettenaufnahmeraumes des Gehäuses befindet. DAdurch sind Verwicklungen mit der Kette ausgeschlossen. Erst nachdem die Kette weitgehend aus dem Gehäuse herausgezogen ist, wird durch den weiteren Zug über die Kette der Schlitten mit der Halterung für den Verschlußbügel nach vorne bis zu einem Anschlag gefahren, wonach dann durch weiteren Zug die Ausrückung des Verschlußbügels aus der Halterung erfolgt, so daß durch das Andrückglied der Verschlußbügel gegen das Rad verschwenkt werden kann. Zweckmäßigerweise ist der Schlitten mit einem Rückstellglied in Art einer Gummischnur od. dgl. gekoppelt, so daß der Schlitten nach Ausrücken des Verschlußbügels selbsttäig in seine Ausgangslage zurückgeführt wird.

Für das einwandfreie Ausziehen der Kette ist auch ein Aufnahmeblock auf dem Kastenboden von Vorteil, der einerseits die Borstenbüschel trägt und andererseits bei entsprechender Auslegung der Breite kleiner als der Abstand der beiden Längsreihen der Kette eine seitliche Führung für die Kettenglieder bildet, die zudem in einem seitlichen Stauraum neben dem Aufnahmeblock untergebracht sind, so daß auch in geraffter Stellung der Kette, wo also Kettenquerglied axial hinter dem benachbarten Kettenquerglied liegt, es nicht zu Verwicklungen der Kettenglieder untereinander kommen kann. Zweckmäßigerweise ist der Kettenaufnahmeraum von der Spindel und damit von den beweglichen Teilen durch eine Querwand getrennt.

Nachfolgend wird ein bevorzugtes Ausführungsbeispiel der Erfindung anhand der Zeichnung beschrieben. Darin zeigen in rein schematischer Darstellung
- Fig. 1: eine Draufsicht auf einen die Aufziehvorrichtung aufnehmenden Gehäusekasten in aufgeklappter Stellung,
- Fig. 2: eine Schnittansicht längs der Linie A-A von Fig. 1,
- Fig. 3: eine Seitenansicht einer Ausführungsform eines Verschlußbügels im Schnitt,
- Fig. 4: eine Draufsicht auf den Verschlußbügel nach Fig. 3,
- Fig. 5: eine Stirnansicht des Verschlußbügels nach Fig. 4, gesehen von der linken Seite der Fig. 4 her,
- Fig. 6: eine Funktionsskizze des Verschlußbügels beim Hochschwenken gegen das Fahrzeugrad und
- Fig. 7: den Augenblick der Verriegelung des Verschlußbügels mit der Kette.

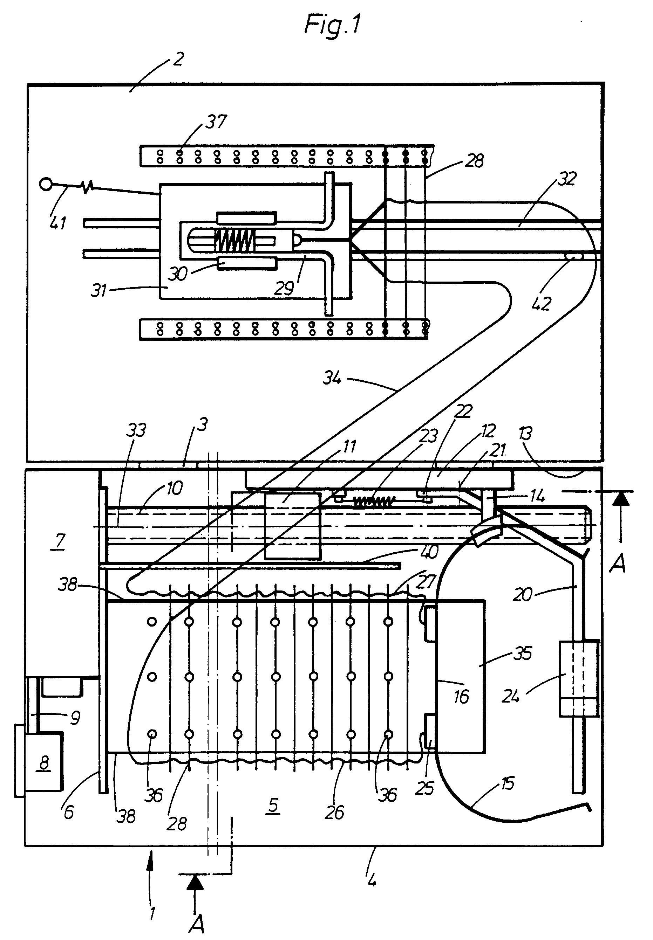

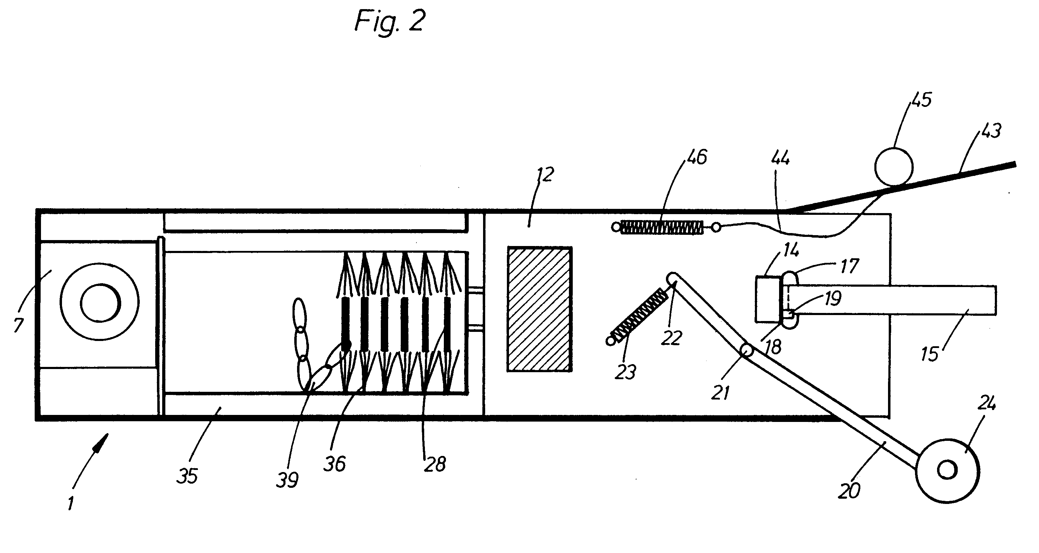

Nach Fig. 1 umfaßt die Vorrichtung eine kastenartiges Gehäuse 1 aus vorzugsweise Blech und rechteckigem Querschnitt, wobei die Breite des Kastens wesentlich größer als die Kastenhöhe ist, wie sich aus einem Vergleich mit Fig. 1 und 2 ergibt. Der Kasten nach dem dargestellten Ausführungsbeispiel ist zweigeteilt, wobei der Kastendeckel 2 nach obenhin weggeschwenkt werden kann, wie durch die Scharniere 3 in Fig. 1 verdeutlicht ist. Zweckmäßigerweise ist die in Fig. 1 untere Längsseitenwand 4 des Kastens einstückig mit dem Kastendeckel 2 ausgebildet, so daß sie mit dem Kastendeckel 2 vom Kastenboden 5 nach oben weggeschwenkt werden kann, so daß ein Zugriff in das Kasteninnere auch von der Seite her möglich ist.

Im Kasten ist abgeteilt durch eine Wand 6 ein Motor 7 aufgenommen, der batteriebetrieben oder über die Fahrzeugelektrik mit Strom versorgt werden kann, wie durch eine Steckdose 8 und Verbindungsleitungen 9 zum Motor 7 in Fig. 1 verdeutlicht ist. Der Motor 7 treibt eine sich parallel zur Längsseite 4 erstreckende Spindel 10 an, auf der eine Spindelmutter 11 sitzt, die mit einem Schlitten 12 fest verbunden ist, der wiederum an der Kastenlängswand 13 parallel zur Längsachse der Spindel geführt ist. Als Führungen für den Schlitten 12 eignen sich insbesondere U-Profilführungen, gebildet durch Umbiegen der Seitenränder der Kastenlängswand 13. Am Schlitten 12 befindet sich ein Halter 14, der einen mit 15 bezeichneten im wesentlichen U-förmigen Griffbügel trägt. Der Griffbügel 15 ist hierbei so aufgenommen, daß die sich seitlich am Radwulst anlegenden beiden Schenkel des Griffbügels 15 in Ausrichtung zum Fahrzeugrad befinden. Ersichtlich wird der Griffbügel 15 so über das Rad gezogen, daß der Reifenwulst innerhalb des Griffbügels liegt, mithin der Steg 16 auf der Lauffläche des Rads anliegt. Der Halt des Griffbügels 16 auf dem Fahrzeugrad wird durch die nach innen federnden U-Schenkel des Bügels bewerkstelligt.

Die Aufnahme des Griffbügels 15 auf dem Halter 14 ergibt sich besonders deutlich aus Fig. 2. Der strichliert dargestellte Griffbügel 15 wird zwischen oberen und unteren Klauen 17 und 18 der Halterung 14 aufgenommen, wobei die Halterung so erfolgt, daß der Griffbügel 15 mit einer gewissen Kraft vom Halter abgezogen werden kann. Ein am unteren Ende des Halters 14 ausgebildeter Führungsfortsatz 19, der in eine entsprechende Ausnehmung im Steg 16 des Griffbügels eingreift, sichert ein einwandfreies Abziehen des Griffbügels und bedingt insbesondere eine seitliche Fixierung des Bügels auf dem Halter.

Am Schlitten 12 ist ferner ein Lenkhebel 20 bei 21 angelenkt, wobei an dem über den Gelenkpunkt 21 vorstehenden Abschnitt des Lenkhebels 20 bei 22 eine Feder 23 angreift, die den Lenkhebel 20 und die darauf angeordnete Andrückrolle 24 entgegen einer Schwenkbewegung in Uhrzeigerrichtung vorspannt.

Der Griffbügel 15 weist am hinteren Ende des Stegs 16 nachfolgend noch näher beschriebene Aufnahmelaschen 25 auf, an denen auch die Kette befestigt ist.

Wie am besten aus der Draufsicht in Fig. 1 hervorgeht, ist die Kette aus zwei Längsreihen 26 und 27 von Kettengliedern gebildet, die durch Querglieder 28 verbunden sind. In Zwischenabschnitten können die beiden Kettenreihen 26 und 27 über Kreuz geführt sein, um eine Stabilisierung der Kette zu bewirken. Zweckmäßigerweise können zusätzlich gesonderte Griffbügel an der Kette in Abständen vorgesehen sein, mit denen die Kette auf dem Rad zusätzlich zum Griffbügel 15 fixierbar ist. In Fig. 1 ist die Kette in Lagerstellung dargestellt, in der die Querglieder 28 axial zusammengeführt sind. Das hintere Kettenende ist am Verschlußbügel 29 befestigt, der in einer durch zwei Federlaschen gebildeten Halterung 30 auf einem Schlitten 31 an der Innenfläche des Kastendeckels aufgenommen ist. Der Schlitten 31 ist in zwei parallelen Führungen 32 mit Schwalbenschwanz- oder U-Profil bewegbar, wobei die Führungen 32 parallel zur Spindelachse 33 verlaufen. Durch die Linien 34 ist rein schematisch die Verbindung der Kette zur Halterung 30 dargestellt, wobei allerdings der überwiegende Teil der Länge der Kette auf dem Kastenboden 5 liegt und nur das Kettenende oben an dem in der Halterung 30 lösbar aufgenommenen Verschlußbügel 29 befestigt ist.

Die Auflagerung der Kette erfolgt auf einem am Kastenboden 5 angeordneten Auflagerblock 35, der mit nach oben vorstehenden Borstenbüschel 36 als Reibungsglieder versehen ist. Die Borstenbüschel 36 dienen dazu in Verbindung mit am Kastendeckel beidseits des Schlittens 31 vorgesehenen Reihen von Borstenbüscheln 37 auf die Kette einen gewissen Zug entgegen der Ausziehrichtung auszuüben, so daß ein einwandfreies Ausziehen der Kette gewährleistet ist. Die Breite des Auflagerblockes 35 ist so bemessen, daß sie geringer als der Abstand der beiden Kettenreihen 26 und 27 ist, so daß die Kettenglieder der Längsreihen 26 und 27 an den Seitenwänden 38 des Auflagerblockes 35 geführt sind, mithin an den Seiten des Auflagerblockes 35 ein Stauraum für die Kettenglieder gebildet ist, wie rein schematisch in Fig. 2 bei 39 angedeutet ist. Durch diese seitliche Führung der Längsreihen 26 und 27 ist ein Verhaken oder Verklemmen der Kette beim Ausziehen verhindert. Eine Querwand 40 grenzt die Spindel 10 vom Kettenaufnahmeraum ab.

Der Schlitten 31 ist mit einem Rückstellglied in Art eines Gummizuges 41 verbunden, so daß nach Verfahren des Schlittens 31 dieser wieder in seine Ausgangslage nach links zurückbewegt wird. Ein Anschlag 42 dient der Begrenzung der Schlittenbewegung.

Aus Fig. 2 ist auch ein die Schmale Seitenwand bzw. die Ausfahröffnung für den Griffbügel 15 an der schmalen Seitenwand schließender Deckel 43 ersichtlich, der mit Ausfahren des Schlittens 12 nach obenhin aufgeklappt wird. In der Schließstellung wird der Deckel 43 fest gegen den Kasten gedrückt, indem der Seilzug 44 über die Grifflasche 45 entgegen der Wirkung der Zugfeder 46 angezogen und am Deckel verrastet wird. Unter Zwischenschaltung einer Dichtschnur wird damit ein absolut dichter Verschluß des Kastens gewährleistet.

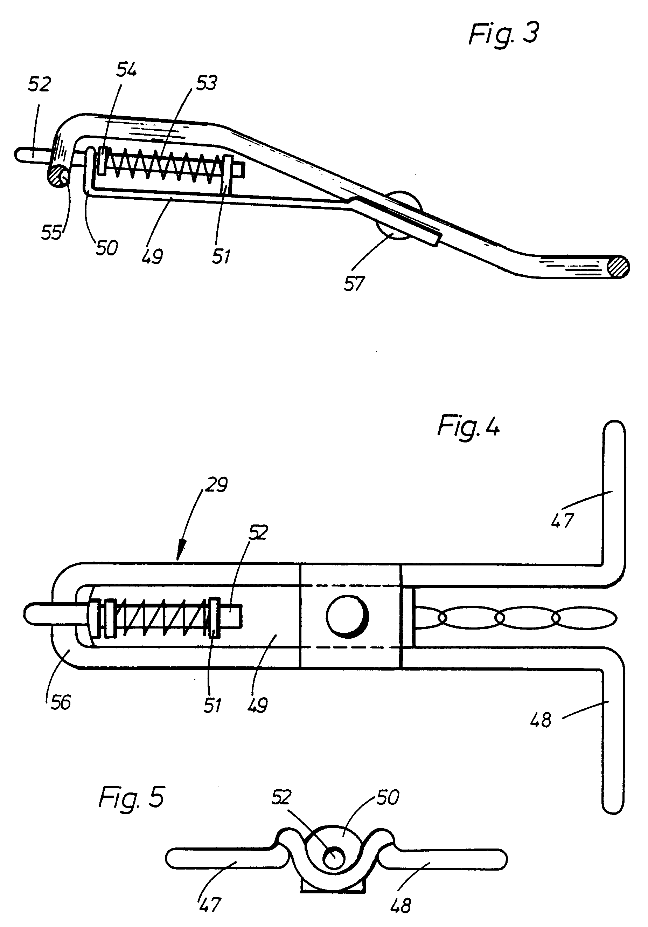

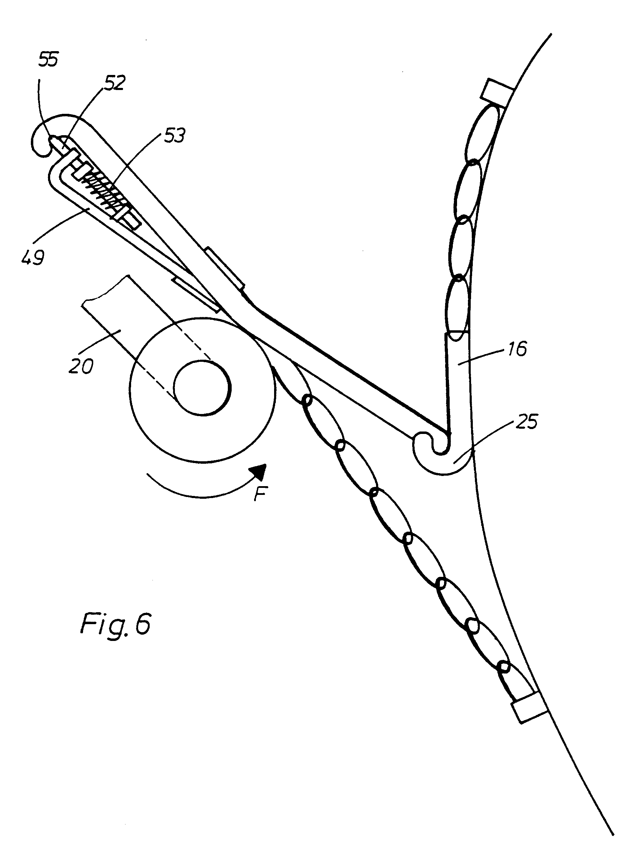

In den Fig. 3 bis 5 ist der Verschlußbügel in etwa seinen natürlichen Abmessungen dargestellt. Der Verschlußbügel 29 ist im wesentlichen U-förmig ausgebildet, wobei an den beiden Schenkelenden seitlich abkragende Fortsätze 47 und 48 ausgebildet sind, mit denen der Verschlußbügel 29 in die Aufnahmelaschen 25 des Griffbügels 15 von obenher eingreift. Im Bereich der U-Schenkel ist der Verschlußbügel 29 ganz leicht S-förmig geformt und zwar in Anpassung an den Außenumfang des Rades und zur Bildung eines Freiraumes für einen mit 49 bezeichneten Federbügel, der in Aufnahmeflanschen 50 und 51 einen Verriegelungsstift 52 trägt, um den eine Druckfeder 53 angeordnet ist, die einerseits am Flansch 51 und andererseits auf einer Schulter 54 des Verriegelungsstifts 52 anliegt. Wie am besten aus Fig. 6 hervorgeht, greift der Verriegelungsstift 52 in einer Raststellung unter Kompression der Druckfeder 53 in eine Ausnehmung 55 des Stegs 56 des Verschlußbügels 29 ein. In dieser Raststellung steht der bei 57 an den beiden U-Schenkeln befestigte Federbügel 49 nockenartig über den Verschlußbügel vor, wie am besten aus Fig. 6 hervorgeht.

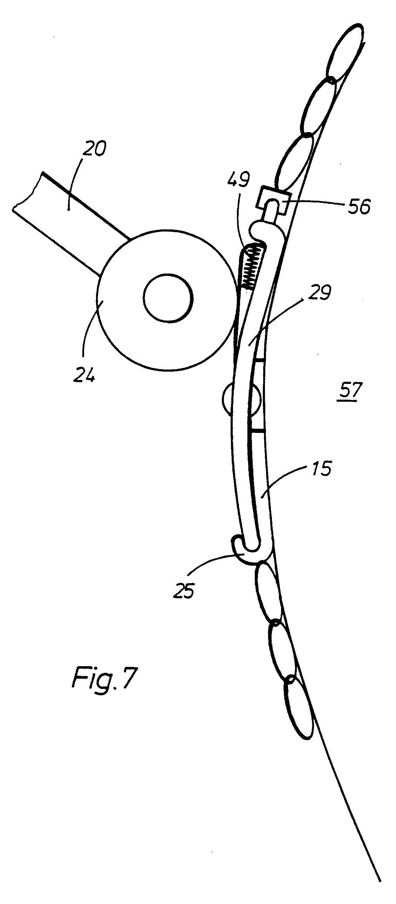

Die Funktionsweise der Vorrichtung ist die folgende. Der geeignet am Fahrzeug angeordnete Kasten 1, der insbesondere im Fahrzeug integriert sein kann, ist mit seiner Ausfahröffnung auf das Rad ausgerichtet, auf das die Kette aufgezogen werden soll. Durch Betätigung eines Bedienungshebels, der an geeigneter Stelle, insbesondere am Armaturenbrett des Fahrzeuges, untergebracht sein kann, wird der Motor 7 in Gang gesetzt, so daß die Spindel 10 gedreht wird. Dadurch fährt der Schlitten 12 gemäß Fig. 1 nach rechts, so daß der Deckel 43 aufgeklappt und der Griffbügel 15 durch die Ausfahröffnung in Richtung auf das Rad parallel zur Längsachse der Spindel ausgefahren wird. Sobald der Griffbügel 15 auf das Rad gefahren ist, so daß die beiden Schenkel das Rad seitlich übergreifen und der Steg 16 an der Lauffläche anliegt, erfolgt infolge des Anschlagwiderstandes der Stop des Motorantriebes, der dann aufgrund einer geeigneten Steuerung in Gegenrichtung angetrieben wird und zwar über eine kurze Zeitspanne von etwa 2 bis 3 Sekunden, wodurch der Griffbügel 15 von den Klauen 17 und 18 der Halterung 14 abgezogen wird. Der Griffbügel 15 sitzt dann alleine unter der Federspannung seiner beiden Schenkel auf dem Rad auf. Daraufhin wird das Fahrzeug zurückgesetzt, so daß sich das Rad dreht. Dadurch wird die Kette aus dem Kasten herausgezogen und legt sich über das Rad. Zum Schluß der Ausziehbewegung wird der Schlitten 31 über die Kette mit nach vorne gezogen, bis er in Anlage an den Anschlag 42 gelangt. Nach einer Umdrehung gelangt der Verschlußbügel 29 mit seinen beiden Fortsätzen 47 und 48 in die Aufnahmelaschen 25 des Stegs 16 des Griffbügels 15. Mit weiterer Drehung des Rads wird schließlich der Verschlußbügel aus der Halterung 30 gezogen. Der mit dem Schlitten 12 ausgefahrene Lenkhebel 20, der durch die Feder 23 in Pfeilrichtung F gemäß Fig. 6 vorgespannt ist, drückt hierbei den Verschlußbügel 29 gegen das Rad, wie sich aus Fig. 7 ergibt. Dabei läuft die Rolle 24 über den nockenartig vorstehenden Federbügel 49 des Verschlußbügels 29, so daß der Federbügel nach innen gedrückt wird und damit der Verriegelungsstift 52 aus der Rastausnehmung 55 ausgerastet wird. Infolge der Vorspannung durch die Feder 53 schnappt der Verriegelungsstift 52 nach vorne und in eine entsprechende Ausnehmung eines Kettenquergliedes 56, wie sich am besten aus Fig. 7 ergibt. Dadurch ist der Verschlußbügel 29 mit dem vorderen Kettenende verriegelt und damit die Kette fest auf das Rad 57 aufgezogen. Durch die Verschwenkung des Verschlußbügels erfolgt auch ein Verspannen der Kette selbst, so daß die Kette so fest auf dem Rad sitzt, daß zusätzliche Griffbügel über den Umfang der Kette an sich nicht erforderlich sind, wenngleich in besonderen Ausführungsfällen zusätzlich Greifbügel vorgesehen sein können.

Die Abnahme der Kette erfolgt einfach dadurch, daß der Verriegelungsstift entriegelt wird, wonach der Verschlußbügel zurückgeschwenkt und die Kette abgenommen werden kann.

## Patentansprüche

1. Verfahren zum selbsttätigen Aufziehen eines Gleitschutzelements, insbesondere einer Gleitschutzkette auf ein Kraftfahrzeugrad, wobei aus einem am Fahrzeug fest angeordneten Gehäuse ein Griffbügel (15) in Anschlag auf das Fahrzeugrad gefahren wird, derart, daß die beiden Schenkel des Griffbügels (15) seitlich über den Radwulst gedrückt werden, der Griffbügel aus seiner gehäuseseitigen Halterung (14) gelöst wird indem das Fahrzeug verfahren wird, so daß der auf dem Reifen sitzende Griffbügel die Kette aus dem Gehäuse herauszieht, wobei nach einer Umdrehung des Rades ein in einer gehäuseseitig angeordneten Halterung aufgenommener und am Kettenende angeordneter Verschlußbügel (29) mit weiterer Raddrehung aus der Halterung gezogen und in Eingriff mit dem Griffbügel (15) gebracht wird,
**dadurch gekennzeichnet**, daß Reib
glieder (36) gegen die Kette zum Aufbau des Gegenzugs gedrückt werden, daß zum Lösen des Griffbügels (15) die Halterung (14) nach Erreichen der Anschlagstellung des Griffbügels zurückgefahren wird und daß der Verschlußbügel (29) durch ein Andrückglied in Verschlußstellung der auf das Rad aufgezogenen Kette gebracht wird.

2. Verfahren nach Anspruch 1,
**dadurch gekennzeichnet**, daß die Reibglieder (36) von zwei Seiten gegen die Kette gedrückt werden.

3. Verfahren nach einem der vorhergehenden Ansprüche,
**dadurch gekennzeichnet**, daß das Andrückglied für den Verschlußbügel (29) unter Federvorspannung gehalten wird.

4. Verfahren nach einem der vorhergehenden Ansprüche,
**dadurch gekennzeichnet**, daß durch Vorbeifahren des Verschlußbügels (29) am Andrückglied der Bügel gegen das Rad geschwenkt und in der an das Rad angeschwenkten Lage des Verschlußbügels (29) ein federnd vorgespannter Verriegelungsstift (52) ausgedrückt wird, der in ein entsprechendes Rastglied an der Kette einrastet.

5. Vorrichtung zum selbsttätigen Aufziehen eines Gleitschutzelements, insbesondere einer Gleitschutzkette auf ein Kraftfahrzeugrad, mit einem Gehäuse zur Aufnahme der Kette, einem am vorderen Kettenende angeordneten Griffbügel (15) zur Befestigung am Fahrzeugrad, einem Verschlußbügel zur Befestigung der auf das Fahrzeugrad aufgezogenen Kette, wobei der Griff- und der Verschlußbügel (29) in Halterungen lösbar aufgenommen sind, die Halterungen für den Griffbügel (15) zum aus- und einfahren des Bügels aus bzw. in das Gehäuse durch einen Motor angetrieben und längs einer Gehäuseachse geführt ist und den Griffbügel (15) ausgerichtet in Aufsteckstellung auf das Rad trägt,
**dadurch gekennzeichnet**, daß ein aus dem Gehäuse ausfahrbares Andrückglied (20, 24) vorgesehen ist, das den Verschlußbügel (29) nach Ausziehen der Kette aus dem Gehäuse gegen das Rad drückt und mit der Kette verriegelt, daß die Kette innerhalb des Gehäuses in axialer Ausrichtung im wesentlichen parallel zur Führungsachse für die Halterungen (14) aufgenommen ist, und daß auf dem Kastenboden (5) ein Auflagerbock (35) für die Kette vorgesehen ist, auf dem Reibglieder (36) angeordnet sind.

6. Vorrichtung nach Anspruch 5,
**dadurch gekennzeichnet**, daß die Kette im Gehäuse in axial zusammengeschobener Stellung der Kettenquerglieder (28) längs einer mit dem Kastenboden parallelen Ebene aufgenommen ist.

7. Vorrichtung nach Anspruch 5,
**dadurch gekennzeichnet**, daß die Reibglieder durch Borstenbüschel gebildet sind.

8. Vorrichtung nach einem der vorhergehenden Ansprüche 5 bis 7,
**dadurch gekennzeichnet**, daß die Breite des Auflagerbockes (35) kleiner als der Abstand zwischen den Längsreihen (26, 27) der Kette ist, so daß die Blockseiten (36) Stauraum sowie Führungen für die Kettenglieder der Längsreihen (26) bilden.

9. Vorrichtungen nach einem der Ansprüche 5 bis 8,
**dadurch gekennzeichnet**, daß die Halterung (30) für den das Kettenende bildenden Verschlußbügel (29) auf der Innenseite des Kastendeckels (2) angeordnet ist.

10. Vorrichtung nach einem der Ansprüche 5 bis 9,
**dadurch gekennzeichnet**, daß die Halterung (30) auf einem Schlitten (31) sitzt, der parallel zur Führungsachse für die Griffbügelhalterung (14) geführt ist, wobei die Führungen durch zwei parallele Profilschienen (32) auf der Innenfläche des Kastendeckels gebildet sind.

11. Vorrichtung nach einem der vorhergehenden Ansprüche 5 bis 10,
**dadurch gekennzeichnet**, daß die Halterung (30) mit einem Rückstellglied (31), vorzugsweise in Art eines Gummikabels verbunden ist.

12. Vorrichtung nach einem der Ansprüche 5 bis 11,
**dadurch gekennzeichnet**, daß am Kastendeckel (2) Reibgleider, vorzugsweise Borstenbüschel (37) angeordnet sind, die von oben auf die im Gehäuse aufgenommene Kette drücken.

13. Vorrichtung nach einem der Ansprüche 5 bis 12,
**dadurch gekennzeichnet**, daß der Antrieb des Griffbügels (15) durch eine motorbetriebene Spindel (10) erfolgt, wobei die Spindel (10) über eine Spindelmutter (11) auf einem an einer Kastenlängsseite (13) geführten Schlitten (12) wirkt, der die Griffbügelhalterung (14) trägt.

14. Vorrichtung nach einem der Ansprüche 9 bis 13,
**dadurch gekennzeichnet**, daß die Griffbügelhalterung (14) Klauen (17,18) aufweist, die zwischen sich den Griffbügel (15) aufnehmen und daß die Halterung einen Führungsfortsatz (19) parallel zur Führungsachse (33) der Halterung (14) aufweist, der durch eine Aussparung im Griffbügel greift und den Griffbügel (14) biem Abziehen von den Halterungsklauen (17, 18) führt.

15. Vorrichtung nach einem der Ansprüche 9 bis 14,
**dadurch gekennzeichnet**, daß das andere Glied (20, 24) eine Rolle (24) an einem am Schlitten (12) angelenkten Lenkhebel (20) aufweist.

16. Vorrichtung nach Anspruch 24,
**dadurch gekennzeichnet**, daß der Lenkhebel (20) in Richtung auf das Rad federnd vorgespannt ist.

17. Vorrichtung nach einem der Ansprüche 9 bis 16,
**dadurch gekennzeichnet**, daß am Griffbügel (15) Aufnahmelaschen (25) zum Einhaken des Verschlußbügels (29) vorgesehen sind.

18. Vorrichtung nach einem der Ansprüche 9 bis 17,
**dadurch gekennzeichnet**, daß der Verschlußbügel (29) im wesentlichen an den Schenkelenden zum Einhaken in den Griffbügel (15) ausgebildet ist und zwischen den U-Schenkeln einen nach außen nockenartig für den Eingriff mit dem Andrückglied vorstehenden Federbügel (49) trägt, auf dem ein Verriegelungsstift (52) längsverschieblich und federvorgespannt aufgenommen ist, der in Raststellung unter Federvorspannung in eine Rastausnehmung (55) im U-Steg eingreift und durch Eindrücken des Federbügels (49) aus einer Raststellung mit dem U-Steg ausrastbar ist.

19. Vorrichtung nach Anspruch 18,
**dadurch gekennzeichnet**, daß der Federbügel (49) des Verschlußbügels (29) beim Vorbeilauf an der Andrückrolle (24) durch diese eingedrückt wird, wobei der ausgerastete Verriegelungsstift (52) in eine Rastausnehmung (56) an der Kette eingreift.

20. Vorrichtung nach einem der vorhergehenden Ansprüche,
**dadurch gekennzeichnet**, daß nach Lösen des Verschlußbügels und der Kette vom Rad die Kette in das Gehäuse einfahrbar ist, wobei zweckmäßgerweise der Verschlußbügel und der Griffbügel in der gehäuseseitigen Halterung befestigt und danach der Griffbügel eingefahren wird.

## Claims

1. A process for the automatic mounting of an anti-slip element, particularly of an anti-slip chain, on a wheel of a motor vehicle, whereby, from a housing fixed firmly to the vehicle, a gripping stirrup (15) is moved into contact with the wheel of the vehicle in such a way that the two shanks of the gripping stirrup (15) are forced sideways over the bulge of the wheel, the gripping stirrup being released from its holding bracket (14) alongside the housing while the vehicle is moved, so that the gripping stirrup sitting on the tyre withdraws the chain from the housing, whereby, after one revolution of the wheel, a locking stirrup (29), located on the end of the chain and picked up from a holding bracket located alongside the housing, is drawn out of the holding bracket with one more revolution of the wheel and is brought in to engage with the gripping stirrup (15),
characterised in that frictional components (36) are forced against the chain in order to build up counter-active pressure, that the holding bracket (14), in order to release the gripping stirrup (15), is pushed back after reaching the contact position of the gripping stirrup and that the locking stirrup (29) is brought into a locking position for the chain, now mounted on the wheel, by means of a compression member.

2. A process according to claim 1,
characterised in that the frictional components (36) are pressed against the chain from two sides.

3. A process according to one of the preceding claims,
characterised in that the compression member for the locking stirrup (29) is held under spring tension.

4. A process according to one of the preceding claims,
characterised in that, by moving the locking stirrup (29) past the compression member, the stirrup is pivoted against the wheel and, with the locking stirrup (29) having been swung to a position on the wheel, a spring-loaded bolting pin (52) is activated, which engages into a corresponding locating member on the chain.

5. A device for the automatic mounting of an anti-slip element, particularly an anti-slip chain, on a wheel of a motor vehicle, with a housing for location of the chain, a gripping stirrup (15) for fixing on to the wheel of the vehicle and located at the foremost end of the chain, a locking stirrup for holding the chain once mounted on the wheel of the vehicle, whereby the gripping and the locking stirrup (29) are contained detachably in holding brackets, the holding brackets for the gripping stirrup (15), for extracting the stirrup from or returning it into the housing, being driven by a motor and conveyed along one axis of the housing and holding the gripping stirrup (15) aligned into the application position to the wheel,
characterised in that a compression member (20, 24) is provided which can be extracted from the housing and which, after withdrawal of the chain from the housing, presses the locking stirrup (29) against the wheel and locks it on to the chain, that the chain is located within the housing in axial alignment essentially parallel to the transportation axis for the holding brackets (14), and that on the floor of the box (5) a support rack (35) for the chain is provided on which frictional components (36) are located.

6. A device according to claim 5,
characterised in that the chain is located in the housing by axial stacking together of the lateral links (28) of the chain into a position along a level plane parallel to the floor of the box.

7. A device according to claim 5,
characterised in that the frictional components are formed of bristle tufts.

8. A device according to one of the preceding claims 5 to 7,
characterised in that the width of the support rack (35) is less than the clearance distance between the length-wise rows (26, 27) of the chain, so that the rack sides (36) form storage space as well as guide-channels for the links of the chain along the length of the rows (26).

9. Devices according to one of the claims 5 to 8,
characterised in that the holding bracket (30) for the locking stirrup (29) forming the end of the chain is located on the inner side of the lid (2) of the box.

10. A device according to one of the claims 5 to 9,
characterised in that the holding bracket (30) sits on a sliding-carriage (31) which is conveyed parallel to the transportation axis for the holding bracket (14) of the gripping stirrup, whereby the guide-channels are formed by two parallel profiled rails (32) on the inner surface of the lid of the box.

11. A device according to one of the preceding claims 5 to 10,
characterised in that the holding bracket (30) is connected to aa re-locating component (31) preferably in the form of a rubberized cable.

12. A device according to one of the claims 5 to 11,
characterised in that, on the lid (2) of the box, frictional components preferably bristle tufts (37) are positioned which press down from above on to the chain located in the housing.

13. A device according to one of the claims 5 to 12,
characterised in that the drive for the gripping stirrup (15) is effected via a motor-driven spindle (10), whereby the spindle (10) activates via a screw-nut (11) on a sliding-carriage (12) conveyed along one side (13) of the box, said sliding-carriage containing the holding bracket (14) of the gripping stirrup.

14. A device according to one of the claims 9 to 13,
characterised in that the holding bracket (14) of the gripping stirrup comprises claws (17, 18) between which the gripping stirrup (15) is grasped, and that the holding bracket comprises an extended guide-channel (19) being parallel to the transportational axis (33) of the holding bracket (14) and reaching through a recess in the gripping stirrup to convey the gripping stirrup (14) on withdrawal from the claws (17, 18) of the holding bracket.

15. A device according to one of the claims 9 to 14,
characterised in that the other member (20, 24) comprises a roller (24) on a guide-lever (20) pivoted on the sliding-carriage (12).

16. A device according to claim 24,
characterised in that the guide-lever (20) is spring-loaded in a direction towards the wheel.

17. A device according to one of the claims 9 to 16,
characterised in that, on the gripping stirrup (15) locating clips (25) are provided for hooking in the locking stirrup (29).

18. A device according to one of the claims 9 to 17,
characterised in that the locking stirrup (29) is constructed essentially at the ends of the shanks for hooking into the gripping stirrup (15) and, between the U-shanks and projecting outwards in the form of a twisting cam for engagement with the compression member, bears a sprung stirrup (49) on which an axially adjustable and spring-loaded bolting pin (52) is incorporated which, in its locating position, engages under pressure from the spring-loading into a locating recess (55) in the U-bar and, on depression of the sprung stirrup (49) can be dislodged from a locating position with the U-bar.

19. A device according to claim 18,
characterised in that the sprung stirrup (49) of the locking stirrup (29), when moving past the compression roller (24), is depressed by the latter, whereby the dislodged bolting pin (52) engages into a locating recess (56) on the chain.

20. A device according to one of the preceding claims,
characterised in that, after the releasing of the locking stirrup and the chain from the wheel, the chain can be introduced into the housing, whereby, advisably, the locking stirrup and the gripping stirrup are fixed to the holding bracket alongside the housing, after which the gripping stirrup is inserted.

## Revendications

1. Procédé pour le montage automatique d'un élément anti-dérapant, en particulier d'une chaîne anti-dérapage, sur une roue de véhicule, une poignée (15) qui sort d'un carter disposé de façon fixe sur le véhicule étant déplacée pour venir buter contre la roue du véhicule, de telle sorte que les deux branches de la poignée (15) sont pressées latéralement au-dessus du bourrelet de la roue, la poignée étant détachée de sa fixation située du côté du carter, lorsque le véhicule est déplacé, de façon à ce que la poignée fixée sur la pneu enlève la chaîne du carter, une traverse de fermeture (29) logée dans une fixation disposée du côté du carter et située à l'extrémité de la chaîne étant sortie de la fixation après un tour de roue et lorsque celle-ci continue à tourner et étant engrenée avec la poignée (15), caractérisé en ce que des éléments de friction (36) sont pressés contre la chaîne pour constituer la contre-traction, en ce que, pour détacher la poignée (15), la fixation (14) est rappelée lorsque la position de butée de la poignée a été atteinte et en ce que la traverse de fermeture (29) est amenée par un élément de pression en position de blocage de la chaîne installée au-dessus de la roue.

2. Procédé selon la revendication 1, caractérisé en ce que les éléments de friction (36) sont pressés des deux côtés contre la chaîne.

3. Procédé selon l'une des revendications précédentes, caractérisé en ce que l'élément de pression destiné à la traverse de fermeture (29) est maintenu sous précontrainte du ressort.

4. Procédé selon l'une des revendications précédentes, caractérisé en ce que le passage de la traverse de fermeture (29) devant l'élément de pression permet à la traverse de pivoter contre la roue et qu'une broche de verrouillage (52) précontrainte par ressort soit pressée dans la position de pivotement contre la roue de la traverse de fermeture (52), broche de verrouillage qui s'enclenche dans un maillon d'arrêt correspondant de la chaîne.

5. Dispositif pour le montage automatique d'un élément anti-dérapant, en particulier d'une chaîne anti-dérapage, sur une roue de véhicule, muni d'un carter destiné à loger la chaîne, d'une poignée (15) disposée à l'extrémité avant de la chaîne et destinée à la fixation sur la roue du véhicule, d'une traverse de fermeture Pour la fixation de la chaîne installée au-dessus de la roue du véhicule, la poignée et la traverse de fermeture (29) étant logées de façon amovible dans des fixations, ces dernières destinées à la poignée (15) étant actionnées par un moteur pour faire sortir la traverse du carter ou l'y faire entrer, guidées le long d'un axe du carter et supportant la poignée (15) en étant alignées en position d'adjonction sur la roue, caractérisé en ce qu'un élément de pression (20, 24) que l'on peut faire sortir du carter est prévu, élément de pression qui presse la traverse de fermeture (29) contre la roue lorsque la chaîne est sortie du carter et bloque cette traverse avec la chaîne, en ce que celle-ci est logée à l'intérieur du carter en alignement axial et de façon essentiellement parallèle à l'axe de guidage des fixations (14) et en ce qu'un tréteau (35) est prévu pour la chaîne sur le fond de la boîte (5), tréteau sur lequel sont disposés des éléments de friction (36).

6. Dispositif selon la revendication 5, caractérisé en ce que la chaîne est logée dans le carter, le long d'un plan parallèle au fond de la boîte, les maillons transversaux de la chaîne (28) étant poussés les uns contre les autres de façon axiale.

7. Dispositif selon la revendication 5, caractérisé en ce que les membres de friction sont formés par des touffes de poils de brosserie.

8. Dispositif selon l'une des revendications précédentes 5 à 7, caractérisé en ce que la largeur du tréteau (35) est inférieure à l'écartement entre les rangées longitudinales (26, 27) de la chaîne, de sorte que les côtés à blocs (36) forment un espace de retenue ainsi que des glissières pour les maillons des rangées longitudinales (26).

9. Dispositif selon l'une des revendications 5 à 8, caractérisé en ce que la fixation (30) destinée à la traverse de fermeture (29) formant l'extrémité de la chaîne est disposée sur la face intérieure du couvercle de la boîte (2).

10. Dispositif selon l'une des revendications 5 à 9, caractérisé en ce que la fixation (30) est située sur un glissoir (31) qui est guidé parallèlement à l'axe de guidage de la fixation de la poignée (14), les glissières étant formées par deux rails à profilés (32) sur la surface intérieure du couvercle de la boîte.

11. Dispositif selon l'une des revendications précédentes 5 à 10, caractérisé en ce que la fixation (30) est reliée à un élément de rappel (31), de préférence du type câble au caoutchouc.

12. Dispositif selon l'une des revendications 5 à 11, caractérisé en ce que des éléments de friction, de préférence des touffes de póils de brasserie (37) sont disposés sur le couvercle de la boîte (2) et appuient d'en haut sur la chaîne logée dans le carter.

13. Dispositif selon l'une des revendications 5 à 12, caractérisé en ce que la commande de la poignée (15) s'effectue par une broche (10) actionnée par moteur, la broche (10) agissant par l'intermédiaire d'un écrou (11) sur un glissoir (12) guidé sur une face longitudinale de la boîte (13) et qui supporte la fixation (14) de la poignée.

14. Dispositif selon l'une des revendications 9 à 13, caractérisé en ce que la fixation (14) de la poignée présente des griffes (17, 18) qui reçoivent la poignée (15) entre elles et en ce que la fixation présente un prolongement de guidage (19), parallèlement à l'axe de guidage (33) de la fixation (14), prolongement qui mord dans la poignée par l'intermédiaire d'un évidement et guide la poignée (15) lorsque les griffes de la fixation (17, 18) sont enlevées.

15. Dispositif selon l'une des revendications 9 à 14, caractérisé en ce que l'autre élément (20, 24) présente une poulie (24) sur un levier de commande (20) articulé sur le glissoir (12).

16. Dispositif selon la revendication 24, caractérisé en ce que le levier de commande (20) est précontraint par ressort en direction de la roue.

17. Dispositif selon l'une des revendications 9 à 16, caractérisé en ce que, sur la poignée (15), sont prévues des attaches (25) destinées à l'enclenchement de la traverse de fermeture (29).

18. Dispositif selon l'une des revendications 9 à 17, caractérisé en ce que la traverse de fermeture (29) est conçue essentiellement sur les extrémités des branches pour être enclenchée dans la poignée (15) et supporte, entre ses branches en U, une bride de ressort (49) faisant saillie vers l'extérieur comme un ergot et destinée à l'engrènement avec l'élément de pression, bride de ressort sur laquelle est logés de façon longitudinalement translatable et précontrainte par ressort une broche de verrouillage (52) qui, en position de crantage, s'engrène sous précontrainte du ressort dans un creux d'arrêt (55) de la traverse en U et peut être sortie d'une position de crantage avec la traverse en U, en enfonçant la bride de ressort (49).

19. Dispositif selon la revendication 18, caractérisé en ce que, lorsque la bride de ressort (49) de la traverse de fermeture (29) passe devant la poulie de pression (24), elle est enfonçée par cette dernière, la broche de verrouillage sortie (52) s'engrenant dans un creux d'arrêt (56) sur la chaîne.

20. Dispositif selon l'une des revendications précédentes, caractérisé en ce qu'après que la traverse de fermeture et la chaîne aient été détachées de la roue, la chaîne peut être introduite dans le carter, la traverse de fermeture et la poignée étant fixées de façon appropriée dans la fixation située du côté du carter et la poignée étant rentrée.
